Europäisches Patentamt

**European Patent Office**

Office européen des brevets

(19)

(11) Publication number: **0 027 689**
**A1**

(12) # EUROPEAN PATENT APPLICATION

(21) Application number: **80303326.5**

(22) Date of filing: **23.09.80**

(51) Int. Cl.³: **F 02 M 13/06**
**F 02 D 19/08, F 02 B 37/00**

(30) Priority: **25.09.79 US 78763**
**19.02.80 US 122509**

(43) Date of publication of application:
**29.04.81 Bulletin 81/17**

(84) Designated Contracting States:
**AT BE CH DE FR GB IT LI LU NL SE**

(71) Applicant: **Osborn, Norbert L.**
**402 West Grauwyler**
**Irving Texas 75061(US)**

(72) Inventor: **Osborn, Norbert L.**
**402 West Grauwyler**
**Irving Texas 75061(US)**

(74) Representative: **Grundy, Derek George Ritchie**
**CARPMAELS & RANSFORD 43, Bloomsbury Square**
**London WC1A 2RA(GB)**

(54) **Application of turbocharger to an internal combustion engine.**

(57) A fuel supply system and a method of supplying fuel to a turbocharged internal combustion engine. The system enables optimum use of gasoline and alcohol as the fuel. A first mixture of alcohol and air and a second mixture of gasoline and air are compressed by a compressor (70) before delivery to the engine. A carburetor (24) may be used to generate respective stoichiometric mixtures of alcohol and air and of gasoline and air. The carburetor (24) may have a primary venturi for mixing gasoline and air and a secondary venturi for mixing alcohol and air. A control device may be used to control venturi operation in accordance with power requirements. The mixtures may be supplied to a common manifold for delivery to a compressor, (70), preferably of the radial type. Alternatively, separate carburetors may be used. The invention may be applied to a diesel engine in which case an alcohol-air mixture is delivered to the engine via a turbocharger and the primary fuel is directly injected into the engine.

./...

Croydon Printing Company Ltd.

FIG. 1

## APPLICATION OF TURBOCHARGER TO
## AN INTERNAL COMBUSTION ENGINE

The present invention relates to a fuel supply system and method for supplying fuel to a turbocharged internal combustion engine.

At present, there is a great interest in turbocharging internal combustion engines as a means of improving fuel economy. This is particularly the case in automotive applications of turbochargers. By turbocharging an internal combustion engine, the power output of an engine may be increased from fifty to one hundred percent, thus allowing the use of smaller capacity engines than would be required if the engines were naturally aspirated. Where a smaller capacity engine may be substituted for a larger one, during part load operation, where the engine operates most of the time, the smaller engine will operate at a higher, more efficient load condition. Further, the internal friction on a smaller engine will be lower as will the idle fuel consumption.

Detonation or pre-ignition severely limits the application of turbochargers to gasoline fueled, spark ignition, "Otto" cycle engines. Only a limited amount of boost pressure can be applied by way of the turbocharger before detonation is encountered. In general, only about five to seven pounds per square inch of manifold pressure can be tolerated and even then the spark timing must generally be retarded. This results in only about a twenty to thirty percent increase in brake mean effective pressure and the retarded spark timing is detrimental to the potential power output. Thus, the application of turbochargers is limited for gasoline fueled, "Otto" cycle engines.

In the past, high compression fuels have been used in conjunction with gasoline in naturally aspirated engines to eliminate detonation or pre-ignition during high load operating conditions.

Examples of such prior systems include the patents to F. A. Howard, et al., U.S. Patent No. 1,676,827, issued July 10, 1928; McKenzie-Martyn, U.S. Patent No. 1,552,995, issued September 8, 1925; Corse, U.S. Patent No. 2,098,178, issued November 2, 1937 and Overton, U.S. Patent No. 4,019,477, issued April 26, 1977. None of these systems, however, have been used or applied to turbocharged engines. Further, none of these systems recognize the benefit of or provide a means for assuring maximum vaporization of the air-fuel mixture prior to combustion.

Alcohol has been utilized in heavily supercharged "Otto" cycle engines, primarily in racing applications. Where alcohol has been used as a fuel, fuel injection is generally used to inject alcohol into the cylinders immediately ahead of the valves leaving little resident time for evaporation and cooling effects from the alcohol. Moreover, these racing applications normally use only alcohol throughout all ranges of performance of the engine.

Thus, a need has arisen for an internal combustion engine which has the advantages provided by a turbocharged engine as well as those advantages introduced by the use of fuels experiencing very high detonation levels. Further, the need exists for a system which makes optimum use of gasoline where gasoline best meets the operational needs of the engine and for use of a fuel such as alcohol for high load operations. Further, the substitution of an alcohol fuel for gasoline is, at present, an attractive option due to the high cost and limited availability of petroleum based gasoline.

The present invention provides a system permitting the optimum use of gasoline and alcohol as the fuel for a turbocharged internal combustion "Otto" cycle engine. In accordance with one embodiment of the invention, a fuel supply system for supplying an air-fuel mixture to an engine includes a system for generating a first mixture of alcohol and air and a second mixture of gasoline and air. These mixtures are then compressed by passage through a dynamic compressor prior to being delivered to the engine.

In accordance with another embodiment of the invention, the fuel-air mixture system is a carburetor which generates a stoichiometric mixture of alcohol and air and a stoichiometric mixture of gasoline and air.

In accordance with one form of the invention, the carburetor has a primary venturi wherein gasoline and air are mixed and a secondary venturi wherein alcohol and air are mixed. Subsequent to forming stoichiometric mixtures of these two fuels, the air-fuel mixtures are then discharged from the carburetor to a common manifold for delivery to the compressor and then to the engine.

In accordance with still a further embodiment of the invention, the compressor is a portion of a turbocharger mounted between the carburetor and the engine. The turbocharger has a dynamic compressor, of the radial type, for receiving the first and second air-fuel mixtures from the carburetor.

While a primary embodiment of the invention provides for the use of a single carburetor of the multi-barrel type, in an alternative embodiment of the invention, two separate carburetors are used, one for generating the alcohol-air mixture and a separate carburetor for generating the gasoline-air mixture.

In accordance with still another embodiment of the invention, a control structure is used for controlling the operation of the primary and secondary venturis of the carburetor such that the ratio of gasoline-air mixture to alcohol-air mixture may be varied as desired. In relatively low power-need situations, the present fuel supply system may be controlled to supply the engine with a predominantly gasoline-air fuel mixture. In higher power-need situations, a predominantly alcohol-air mixture may be provided to extract greater power from the engine. Further, for engine starting and warm-up, a predominantly gasoline-air fuel mixture may be used thereby overcoming problems in engine starting and warm-up heretofore experienced in alcohol fuel engines.

In accordance with an alternative embodiment, as when the present invention is adapted to a diesel engine, only an alcohol-air mixture, not necessarily a stoichiometric mixture, is delivered to the engine through the turbocharger. In this embodiment, the primary fuel is injected directly into the engine cylinder as is well known in the art.

In accordance with still another alternative embodiment of the invention, only alcohol is used as a fuel in the system, thereby providing an engine which runs solely on alcohol.

Where the fuel mixture is supplied to a turbocharger, the ability to provide an alcohol-air mixture is significant from a thermodynamic standpoint. Because the temperature drop due to complete evaporization of a stoichiometric mixture of methyl alcohol, for example, is on the order of eight times greater than that of a stoichiometric mixture of gasoline, the aerodynamic speed of the compressor is substantially increased over the aerodynamic speed where only gasoline is used. Thus, the boost pressure generated by the turbocharger is significantly increased over that which would be experienced by the use of a fuel, such as gasoline, having a significantly lower temperature drop due to evaporization. Additionally, the work of compression is greatly reduced due to the much lower compressor inlet temperature thereby resulting in less back pressure on the engine.

A lower compressor inlet temperature also produces a lower compressor discharge and engine intake temperature. Due to these much lower temperatures, the mixture density of air-fuel mixture delivered to the engine is much greater (at a given boost level) for alcohol than for gasoline. This allows the engine to injest a greater mass flow and therefore produce more power. Also, much greater boost levels can be used because alcohol exhibits no detonation limit.

Thus, by utilizing a highly turbocharged engine (manifold pressures of 15-20 psi) and the present dual fuel delivery system, an engine 1/2 to 1/3 the size of the required naturally aspirated gasoline engine can be used. For starting and warming the engine only gasoline is used. For steady cruise (low power) an optimum ratio of alcohol/gasoline can be used (including 100% gasoline). For accelerations and grade climbing a predominant alcohol mixture can be used.

The required displacement and operating speed of the engine turbocharged and fueled in this fashion is considerably less than required for a naturally aspirated, gasoline engine producing the same performance. Therefore, the internal engine friction and pumping loop power losses, which account for a considerable portion of the fuel burned at cruise condition, are substantially reduced, thereby improving fuel economy. Additionally, for a typical driving cycle that includes accelerations and grade climbing, a substantial portion of the fuel used will be alcohol. This portion can be optimized based on relative fuel costs, and availability, as well as other factors.

The optimum ratio of alcohol to gasoline can be controlled over a large range by the engine designer by sizing the respective venturis as well as controlling the throttle plates relative to one another. This optimum ratio would be dictated to a large degree by the relative cost and availability of the two fuels. A sophisticated electronic control system can be used whereby the user may adjust the control to optimize the ratio of alcohol to gasoline based on his driving habits, location, type of driving required as well as price and availability of the two fuels.

For a more complete understanding of the present invention, and for further details and advantages thereof, reference is now made to the following description taken in conjunction with the accompanying drawings, in which:

FIGURE 1 illustrates a vertical section view of the present invention applied to an internal combustion engine;

FIGURE 2 is an enlarged vertical section view of the carburetor illustrated as a part of the invention as shown in FIGURE 1;

FIGURE 3 illustrates a partial vertical section view of the diaphragm throttle control structure;

FIGURE 4 illustrates a vertical section view of an alternative carburetor arrangement used in conjunction with the present invention;

FIGURE 5 illustrates a vertical section view of an alternative embodiment of the present invention applied to an internal combustion engine;

FIGURE 6 illustrates a schematic representation showing the present invention applied to a diesel engine;

FIGURE 7 illustrates a vertical section view of a carburetion system used for supplying alcohol to a diesel engine embodying the present invention; and

FIGURE 8 is a section view taken along lines 8-8 of FIGURE 7.

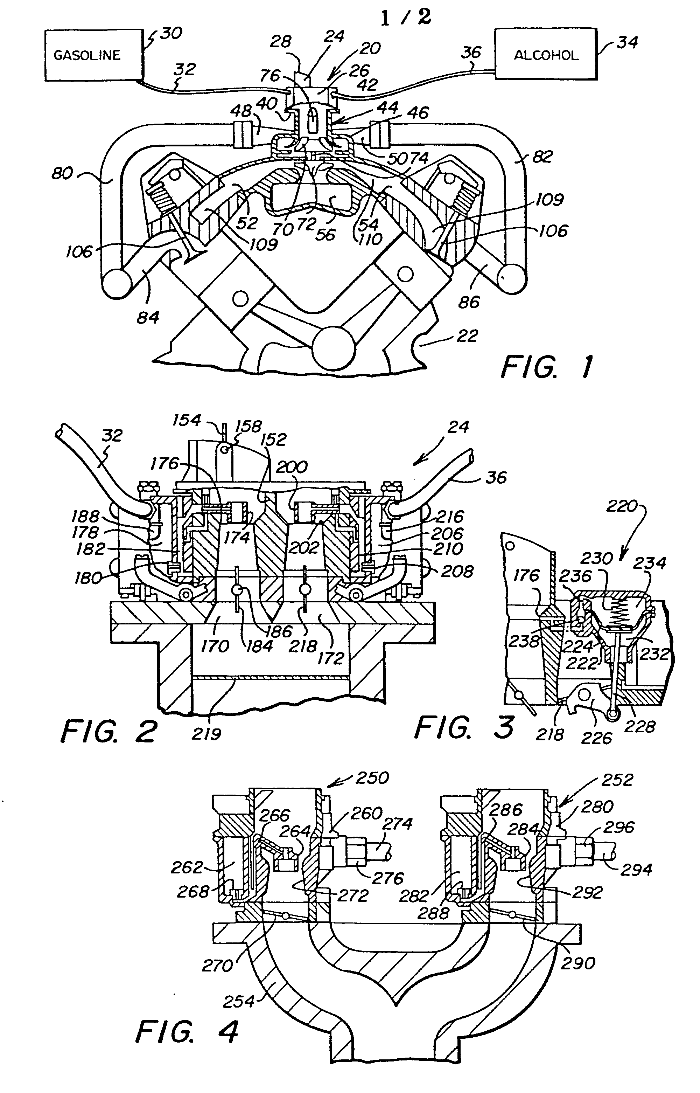

FIGURE 1 illustrates a vertical section view through the fuel supply system 20 mounted on a "V" engine 22. Fuel supply system 20 includes a carburetor 24 having a main body 26 with an air intake 28 formed therein. The carburetor is fed from a first fuel tank 30 by way of line 32 and by second fuel tank 34 by way of fuel line 36. Carburetor 24 includes a mounting flange 40 for attachment to the inlet 42 of turbocharger 44. Turbocharger 44 includes a housing 46 defining an inlet 42, compressor exhausts 48 and 50, turbine inlets 52 and 54 and turbine exhaust 56. Turbocharger 44 includes a compressor rotor 70 and turbine rotor 72 attached for rotation on a shaft 74 supported for rotation on bearing assembly 76. A more detailed discussion of the turbocharger illustrated in FIGURE 1 is found in copending application Serial No. 06/038,286, filed May 11, 1979, by the inventor of the present invention, which application is incorporated herein by reference.

A fuel-air mixture entering inlet 42 of turbocharger 44 is compressed by compressor rotor 70 which is a radial compressor. The compressed air-fuel mixture is discharged through compressor outlets 48 and 50 through ducts 80 and 82, respectively, to manifolds 84 and 86 for injection into cylinders 90 and 92, respectively. As is shown in FIGURE 1, engine 22 includes intake valves 100 (only one shown) and the associated rocker arms and associated structure for operating the intake valves. In the usual manner, the intake valves are open to permit the introduction of an air-fuel mixture into cylinders 90 and 92.

After combustion, the exhaust from cylinders 90 and 92 is discharged through exhaust valves 106 (only one shown). Exhaust valves 106 are operated in the usual fashion by rocker arms and associated structure in a well known manner. Exhaust gases are directed into exhaust ports 109 and exhaust manifold 110 joined to turbine inlets 52 and 54. In this way, the exhaust gases are used to drive turbine rotor 72, thereby driving compressor rotor 70. Gases exhausted from turbine rotor 72 are delivered to turbine exhaust 56 for discharge.

Referring now to FIGURE 2, carburetor 24 is shown in more detail. Carburetor 24 is a four-barrel carburetor similar in construction to the Model 4150 Holley carburetor, showing a section taken through one of the primary venturi and one of the secondary venturi. Carburetor 24 includes an airhorn 150 having a dividing wall 152. Choke valves 154 and 156 are mounted for rotation on shafts 158 and 160, respectively, from the sidewall of airhorn 150 and the two openings formed by dividing wall 152. Choke valve 154 is positioned above primary barrels 170. Discharge nozzle 174 is positioned in the main venturi 176 of primary barrel 170. Nozzle 174 is fed from fuel supplied by line 32 to reservoir 178. Fuel is directed from reservoir 178 through main jet 180 and upwardly through main well 182 to nozzle 174. As a result of the standard carburetor operation and venturi effect, a fuel-air mixture is generated within venturi 176 immediately above a throttle plate 184. Throttle plate 184 is mounted for pivotal rotation on shaft 186 in the standard way. FIGURE 2 shows a float 188 mounted within fuel reservoir 178 to control the entry of fuel through line 32 into reservoir 178.

The structure of the secondary barrels 172 is substantially identical to primary barrels 170. A discharge nozzle 200 is mounted within a venturi 202 and receives fuel from fuel reservoir 206 by way of main jet 208 and main well 210. Fuel is supplied to reservoir 206 by fuel line 36 and is controlled by the action of float 216. A secondary throttle plate 218 is mounted below discharge nozzle 200 and functions in the standard way.

As can be appreciated from viewing FIGURES 1 and 2, fuel supplied to main discharge nozzle 174 in main venturi 176 is mixed with air separate from the mixture of fuel injected into secondary venturi 202 through discharge nozzle 200. In both cases, the carburetor is designed to produce a stoichiometric mixture of air and fuel or a mixture very near thereto.

As is illustrated in FIGURE 2, a screen 219 is mounted within the inlet 42 of turbocharger 44 immediately below primary barrel 170 and secondary barrel 172 of carburetor 24 and ahead of the turbocharger compressor. Screen 219 is so positioned to momentarily restrain the movement of the air-fuel mixture into compressor 70 of the turbocharger to facilitate complete vaporization of the air-fuel mixture prior to introduction into the turbocharger compressor.

In the embodiment illustrated in FIGURES 1 and 2, throttle plate 218 is diaphragm operated by controller 220, shown in FIGURE 3. Controller 220 is of a standard design such as that used in the diaphragm operated secondary throttles used on Holley carburetors. Referring to FIGURE 3, the controller includes a housing 222 divided by a flexible diaphragm 224. Secondary throttle plate 218 is connected to diaphragm 224 by a bell crank 226 attached to the shaft on which secondary throttle plate 218 rotates. Bell crank 226 is attached by way of shaft 228 to diaphragm 224. Diaphragm 224 and shaft 228 are biased in a downward position by a spring 230.

Housing 222 is divided into a lower and an upper chamber 232 and 234, respectively. Upper chamber 234 communicates with a point immediately above primary venturi 176 by way of port 236. A diaphragm check ball 238 is positioned within port 236. In operation of the carburetor, vacuum generated at venturi 176 by increased velocity through the primary venturi is applied above diaphragm 224. When this vacuum increases to a sufficient degree to overcome spring 230, diaphragm 234 is raised to compress spring 230 and thereby rotate bell crank 226 and secondary throttle plate 218. This in effect causes the opening of throttle plate 218. The amount of secondary opening depends initially on air flow through the primary barrel, but as the secondary throttle begins to open and flow is established in the secondary barrel, the vacuum signal from the primary barrel may be augmented by vacuum from one of the secondary barrels through a bleed opening into port 236 to the secondary venturi. Correspondingly, as the primary throttle is closed, reduced vacuum occurs above diaphragm 224, and secondary throttle plate 218 is closed by the action of spring 230 to lower diaphragm 224.

The structure disclosed for the relative control of the primary and secondary throttle plates is a control feature commonly used by various existing carburetors. However, it will be understood that any type of control between the primary and secondary barrels may be employed as desired. Thus, a mechanical linkage may be used between the two barrels such that opening the secondary throttle plate varies either directly or according to some indirect opening and closing of the primary throttle. Alternatively, an electronic control can be used to vary the relative openings between the primary and secondary throttle plates. These controls may be tailored to the particular performance needs, as well as the particular availability and cost of the fuels being used. Of course, this relationship may be varied electronically, mechanically or otherwise to optimize the system both from a performance and/or cost approach. Also, the relationship may be controlled to limit pollution.

Thus, the present invention provides a fuel supply system capable of supplying a turbocharged engine with stoichiometric mixtures of both alcohol and gasoline. Further, the system is so designed such that the primary operating fuel is gasoline with alcohol being provided when a greater power demand is required of the engine.

The present system is significant in a number of ways. First, the system provides for a controlled use of a stoichiometric mixture of alcohol to the fuel system. Under normal or steady-state driving conditions, a gasoline mixture is used by the system. This is significant in that gasoline has a substantially higher heat of combustion. Specifically, gasoline is characterized by a heat of combustion of approximately 19,000 BTU per pound. Methyl alcohol has an approximate heat of combustion value of 8,580 BTU per pound and ethyl alcohol has a heat of combustion value of 11,550 BTU per pound. However, the system also provides for introducing, on a progressive basis, a stoichiometric mixture of alcohol to the engine when power demands are increased. This is significant in that a stoichiometric mixture of alcohol produces a substantially higher heat of combustion than a gasoline mixture. For example, a stoichiometric fuel-air mixture of methyl alcohol has a heat of combustion value of 1,410 BTU per pound of air whereas stoichiometric mixture of gasoline has a heat of combustion value of 1,270 BTU per pound of air.

Greater quantities of alcohol are required to produce a stoichiometric mixture than are required to produce such a mixture of gasoline. The stoichiometric fuel-air ratio for methyl alcohol is 0.155 whereas the stoichiometric mixture ratio is 0.0668 for gasoline. Therefore, almost 2-1/2 times as much alcohol by weight would be required to produce a stoichiometric mixture of methyl alcohol as would be required to produce a similar mixture of gasoline. However, the present invention provides for the use of such an alcohol mixture at only those periods of the operating cycle wherein greater power demands are made. However, it may be desirable to substitute alcohol for gasoline because of cost and availability.

While the benefits just enumerated are significant, an even greater benefit is realized by the use of the present fuel supply system where a turbocharger is used intermediate of the fuel-air supply and the engine. This significance is primarily attributable to the temperature drop due to vaporization of a stoichiometric mixture of alcohol when compared to the temperature drop due to vaporization of a stoichiometric mixture of gasoline. For example, temperature drop ($_\Delta$T) due to the complete vaporization of a stoichiometric mixture of methyl alcohol is 300° F whereas the temperature drop ($_\Delta$T) for a gasoline and air stoichiometric mixture is only 40° F.

The benefits derived from this greater temperature drop upon vaporization for alcohol are illustrated by the following analysis of the performance effects produced thereby. In this analysis, the following terms and relationships are used throughout:

$T_1$ = compressor inlet temperature = $T_o - \Delta T_{vapor}$

$T_o$ = ambient temperature

$\Delta T_{vapor}$ = temperature change due to vaporization = $[(1-A)\Delta T_{gas} + (A)\Delta T_{alcohol}] \times V$

$\Delta T_{gas}$ = temperature drop due to vaporization of stoichiometric mixture of gasoline = 40°R

$\Delta T_{alcohol}$ = temperature drop due to vaporization of stoichiometric mixture of alcohol = 300°R

$V$ = percent of vaporization ahead of turbocharger compressor

While the following analysis applies primarily to alcohol, it will be understood by those skilled in the art that the same benefits and advantages will be derived by using any fuel having a temperature drop upon vaporization which is greater than fuels, such as gasoline, now used. Thus, the present invention is intended to cover the use of such fuels having a higher temperature drop upon vaporization when such use is in the manner described herein.

The compressor inlet temperature defined above as $T_1$ may be calculated for varying percentages of alcohol of the fuel, as well as for varying percentages of vaporization ahead of the inlet of the compressor. At an ambient temperature of 585° Rankin the following results are obtained for $T_1$ at varying percentages of vaporization and varying percentages of alcohol.

COMPRESSOR INLET TEMP
PERCENT VAPORIZATION AHEAD OF COMPRESSOR = 25

| % Alcohol | 0 | 25 | 50 | 75 | 100 |
|---|---|---|---|---|---|
| | 575 | 559 | 543 | 526 | 510 |

- 15 -

COMPRESSOR INLET TEMP

PERCENT VAPORIZATION AHEAD OF COMPRESSOR = 50

| % Alcohol | 0 | 25 | 50 | 75 | 100 |
|-----------|-----|-----|-----|-----|-----|
|           | 565 | 533 | 500 | 468 | 435 |

COMPRESSOR INLET TEMP

PERCENT VAPORIZATION AHEAD OF COMPRESSOR = 75

| % Alcohol | 0 | 25 | 50 | 75 | 100 |
|-----------|-----|-----|-----|-----|-----|
|           | 555 | 506 | 458 | 409 | 360 |

COMPRESSOR INLET TEMP

PERCENT VAPORIZATION AHEAD OF COMPRESSOR = 100

| % Alcohol | 0 | 25 | 50 | 75 | 100 |
|-----------|-----|-----|-----|-----|-----|
|           | 545 | 480 | 415 | 350 | 285 |

As is noticed from these calculations, the compressor inlet temperature drops as the percent of vaporization increases and also is reduced as the percentage of alcohol fuel is increased. Thus, where the compressor inlet temperature is 575° Rankin at a 25% vaporization with 0% alcohol, the compressor inlet temperature is 285° Rankin at a 100% vaporization and 100% alcohol fuel. This decrease in the compressor inlet temperature is beneficial in that it directly affects the corrected compressor speed, the intake manifold temperature, the actual fuel-air mass flow rate, the corrected compressor fuel-air mass flow rate and the work required to drive the compressor.

A turbocharger includes a dynamic compressor for increasing the pressure of the fuel-air mixture prior to its delivery to the engine. As a dynamic compressor, the compressor of the turbocharger is governed by the thermodynamic equation defining corrected compressor rotor speed as:

- 16 -

$$\text{corrected rotor speed} = \frac{N}{\sqrt{\theta}}$$

where:

N = actual rotor speed

$$\theta = \frac{T_1 \text{ °R (compressor inlet temperature in °R)}}{518.7 \text{ °R (standard temperature in °R)}}$$

Therefore, the present invention provides a system for increasing the corrected, or aerodynamic, speed of the compressor without increasing the actual speed. This, in turn, allows higher compressor pressure ratios to be achieved without increasing the actual speed of the compressor. There is a significant benefit derived from operating the compressor at reduced actual speed levels. These benefits include longer life, with less need for rotating component designs capable of withstanding the higher speeds over a long life and improved response rate.

Using the equations noted above, the following information may be computed comparing the variance of the square root of $\theta$ resulting from variations in the percent of alcohol making up the total fuel mixture (assuming the remainder of the fuel mixture is gasoline) and considering the percent of fuel vaporized ahead of the turbocharger compressor.

$\sqrt{\theta}$

PERCENT VAPORIZATION AHEAD OF THE COMPRESSOR = 25

| % Alcohol | 0 | 25 | 50 | 75 | 100 |
|---|---|---|---|---|---|
| | 1.053 | 1.038 | 1.023 | 1.007 | 0.992 |

$\sqrt{\theta}$

PERCENT VAPORIZATION AHEAD OF THE COMPRESSOR = 50

| % Alcohol | 0 | 25 | 50 | 75 | 100 |
|---|---|---|---|---|---|
| | 1.044 | 1.013 | 0.982 | 0.949 | 0.916 |

$$\sqrt{\theta}$$

PERCENT VAPORIZATION AHEAD OF THE COMPRESSOR = 75

| % Alcohol | 0 | 25 | 50 | 75 | 100 |
|-----------|------|------|------|------|------|
|           | 1.034 | 0.988 | 0.939 | 0.888 | 0.833 |

$$\sqrt{\theta}$$

PERCENT VAPORIZATION AHEAD OF THE COMPRESSOR = 100

| % Alcohol | 0 | 25 | 50 | 75 | 100 |
|-----------|------|------|------|------|------|
|           | 1.025 | 0.962 | 0.894 | 0.821 | 0.741 |

For example, assuming the same ambient temperature of 125° F (585° R), then $T_1$ (°Rankin) would be computed as follows where a methyl alcohol stoichiometric mixture is injected into the turbocharger compressor after being completely evaporated prior to reaching the compressor, thus providing the 300° $\Delta T$:

$$T_1 = 125°F + 460° - 300° = 285°R$$

then $\theta$ $\dfrac{285°}{518.7°} = .549$ and

$$\sqrt{\theta} = .741$$

Therefore, corrected compressor speed would equal compressor speed divided by .741.

Assuming an 80,000 rpm compressor speed, the corrected or aerodynamic speed would be:

corrected speed = 80,000 ÷ .741 = 107,962.

It has been found that this effective compressor speed improvement on a test engine from an actual speed of approximately 80,000 rpm to an aerodynamic speed of approximately 100,000 results in an increase of boost pressure from 10.5 psi (gauge) to 16.5 psi (gauge). In effect, the pressure ratio is increased from 1.7 to 2.1.

Likewise, calculations may be made to compare the effect on the manifold temperature immediately ahead of the intake valve as a result of variations in the percent of vaporization and the percent of alcohol of the fuel.

The temperature at the engine intake manifold, $T_m$, may then be calculated, assuming complete vaporization by the time the fuel reaches the intake valve, as follows:

$$T_m = T_1 + \Delta T_{1-2} - (1-V) \left[ (1-A)\Delta T_{gas} + (A)\Delta T_{alcohol} \right]$$

where:

$$\Delta T_{1-2} = \frac{(T_1 \cdot R_c^{n(ave)} - T_1)}{\eta_c}$$

$R_c$ = compressor pressure ratio

$\eta_c$ = compressor efficiency

$n_{(ave)} = \dfrac{k-1}{k}$

$k = (1-A)(k_{gas}) + (A)(k_{alcohol})$

$k_{gas}$ (ratio of specific heat) = 1.35

$k_{alcohol}$ (ratio of specific heat) = 1.38

The following chart indicates values for manifold temperature for varying percentages of vaporization and varying percentages of alcohol in the fuel mixture (for the same assumed ambient temperature in previous examples and assuming a compressor efficiency of 70%).

MANIFOLD TEMP

PERCENT VAPORIZATION AHEAD OF COMPRESSOR = 25

| % Alcohol | 0 | 25 | 50 | 75 | 100 |
|-----------|-----|-----|-----|-----|-----|
| $R_c$ |  |  |  |  |  |
| 1.0 | 545 | 480 | 415 | 350 | 285 |
| 1.5 | 636 | 570 | 504 | 437 | 371 |
| 2.0 | 707 | 640 | 573 | 506 | 438 |
| 2.5 | 765 | 698 | 630 | 562 | 494 |
| 3.0 | 816 | 748 | 680 | 611 | 542 |
| 3.5 | 860 | 792 | 723 | 654 | 585 |

- 19 -

MANIFOLD TEMP

PERCENT VAPORIZATION AHEAD OF COMPRESSOR = 50

| % Alcohol | 0 | 25 | 50 | 75 | 100 |
|-----------|-----|-----|-----|-----|-----|
| $R_c$ | | | | | |
| 1.0 | 545 | 480 | 415 | 350 | 285 |
| 1.5 | 634 | 566 | 497 | 428 | 358 |
| 2.0 | 704 | 632 | 560 | 488 | 416 |
| 2.5 | 761 | 688 | 613 | 539 | 463 |
| 3.0 | 811 | 735 | 659 | 582 | 505 |
| 3.5 | 855 | 777 | 699 | 620 | 541 |

MANIFOLD TEMP

PERCENT VAPORIZATION AHEAD OF COMPRESSOR = 75

| % Alcohol | 0 | 25 | 50 | 75 | 100 |
|-----------|-----|-----|-----|-----|-----|
| $R_c$ | | | | | |
| 1.0 | 545 | 480 | 415 | 350 | 285 |
| 1.5 | 633 | 561 | 490 | 418 | 346 |
| 2.0 | 701 | 625 | 548 | 471 | 393 |
| 2.5 | 758 | 677 | 596 | 515 | 433 |
| 3.0 | 806 | 723 | 638 | 553 | 467 |
| 3.5 | 849 | 763 | 675 | 586 | 497 |

MANIFOLD TEMP

PERCENT VAPORIZATION AHEAD OF COMPRESSOR = 100

| % Alcohol | 0 | 25 | 50 | 75 | 100 |
|-----------|-----|-----|-----|-----|-----|
| $R_c$ | | | | | |
| 1.0 | 545 | 480 | 415 | 350 | 285 |
| 1.5 | 631 | 557 | 483 | 408 | 333 |
| 2.0 | 698 | 617 | 536 | 453 | 371 |
| 2.5 | 754 | 667 | 580 | 491 | 402 |
| 3.0 | 802 | 710 | 617 | 524 | 429 |
| 3.5 | 844 | 748 | 651 | 552 | 453 |

As the above figures illustrate, the compressor discharge temperature, for a given compressor pressure ratio, decreases as the percent of vaporization increases and likewise decreases as the percent of alcohol of fuel increases. Thus, for a 2.0 pressure ratio, the compressor discharge temperature is 707° Rankin for 25% vaporization ahead of the compressor and 0% alcohol of the fuel compared to a discharge temperature of 371° at 2.0 pressure ratio for 100% vaporization ahead of the compressor and 100% alcohol as the fuel.

It will be appreciated that this reduced temperature reduces or substantially eliminates detonation in the engine operation by providing a substantially lower temperature into the engine combustion chambers. The production of oxides of nitrogen is also reduced owing to the reduced manifold temperatures.

The use of alcohol as a fuel in accordance with the present invention also results in a substantial increase in both the actual flow and corrected flow (in pounds per second) and thus provides a corresponding increase in power output.

Actual flow is computed according to the following equation:

$$W_a = \frac{\text{displacement rate} \times 14.7 \times 144 \times R_c}{R_{ave} \times T_m}$$

where the displacement rate, in cubic feet per second, for a 100 cubic inch engine at 1,000 rpm, and assuming a 75% volumetric efficiency is calculated as:

$$\text{displacement rate} = \frac{100 \text{ in}^3}{2 \text{ Rev}} \cdot \frac{100 \text{ Rev}}{\text{min}} \cdot \frac{\text{Ft}^3}{1728 \text{ in}^3} \cdot \frac{1 \text{ min}}{60 \text{ sec}} \cdot .75$$

$$= .3616898$$

- 21 -

Rc = the compressor pressure ratio

$$R_{ave} = \frac{R}{[(1-A)\ M_{m-gas} + A\ M_{m-alcohol}]}$$

where:

R = the universal gas constant = 1545 ft. lb./lb. mole/°R.

A = the percent of alcohol of the fuel.

1-A = the percent of gasoline of the fuel.

$M_{m-gas}$ = the molecular weight of a stoichiometric mixture of gasoline and air = 30.3

$M_{m-alcohol}$ = the molecular weight of a stoichiometric mixture of alcohol and air = 29.4

Again assuming a compressor efficiency of 70% and the same ambient conditions as in the previous examples, the following fuel-air actual mass flows may be calculated for varying pressure ratios ($R_c$) and varying percentages of vaporization ahead of the compressor for varying percentages of alcohol of the fuel.

ACTUAL FLOW (lb/sec)

PERCENT VAPORIZATION AHEAD OF COMPRESSOR = 25

| % Alcohol $R_c$ | 0 | 25 | 50 | 75 | 100 |
|---|---|---|---|---|---|
| 1.0 | 0.028 | 0.031 | 0.036 | 0.042 | 0.051 |
| 1.5 | 0.035 | 0.039 | 0.044 | 0.050 | 0.059 |
| 2.0 | 0.042 | 0.047 | 0.052 | 0.058 | 0.066 |
| 2.5 | 0.049 | 0.053 | 0.059 | 0.065 | 0.074 |
| 3.0 | 0.055 | 0.060 | 0.065 | 0.072 | 0.081 |
| 3.5 | 0.061 | 0.066 | 0.072 | 0.079 | 0.087 |

### ACTUAL FLOW (lb/sec)
#### PERCENT VAPORIZATION AHEAD OF COMPRESSOR = 50

| % Alcohol $R_c$ | 0 | 25 | 50 | 75 | 100 |
|---|---|---|---|---|---|
| 1.0 | 0.028 | 0.031 | 0.036 | 0.042 | 0.051 |
| 1.5 | 0.035 | 0.040 | 0.045 | 0.051 | 0.061 |
| 2.0 | 0.043 | 0.047 | 0.053 | 0.060 | 0.070 |
| 2.5 | 0.049 | 0.054 | 0.060 | 0.068 | 0.079 |
| 3.0 | 0.056 | 0.061 | 0.067 | 0.076 | 0.087 |
| 3.5 | 0.061 | 0.067 | 0.074 | 0.083 | 0.094 |

### ACTUAL FLOW (lb/sec)
#### PERCENT VAPORIZATION AHEAD OF COMPRESSOR = 75

| % Alcohol $R_c$ | 0 | 25 | 50 | 75 | 100 |
|---|---|---|---|---|---|
| 1.0 | 0.028 | 0.031 | 0.036 | 0.042 | 0.051 |
| 1.5 | 0.036 | 0.040 | 0.045 | 0.053 | 0.063 |
| 2.0 | 0.043 | 0.048 | 0.054 | 0.062 | 0.074 |
| 2.5 | 0.050 | 0.055 | 0.062 | 0.071 | 0.084 |
| 3.0 | 0.056 | 0.062 | 0.070 | 0.080 | 0.094 |
| 3.5 | 0.062 | 0.068 | 0.077 | 0.088 | 0.103 |

### ACTUAL FLOW (lb/sec)
#### PERCENT VAPORIZATION AHEAD OF COMPRESSOR = 100

| % Alcohol $R_c$ | 0 | 25 | 50 | 75 | 100 |
|---|---|---|---|---|---|
| 1.0 | 0.028 | 0.031 | 0.036 | 0.042 | 0.051 |
| 1.5 | 0.036 | 0.040 | 0.046 | 0.054 | 0.066 |
| 2.0 | 0.043 | 0.048 | 0.055 | 0.065 | 0.079 |
| 2.5 | 0.050 | 0.056 | 0.064 | 0.075 | 0.091 |
| 3.0 | 0.056 | 0.063 | 0.072 | 0.084 | 0.102 |
| 3.5 | 0.062 | 0.070 | 0.080 | 0.093 | 0.113 |

As can be seen from these figures, the actual flow increases as the percent of alcohol increases, as the compressor pressure ratio increases and as the percent vaporization ahead of compressor increases.

For example, an actual flow of 0.028 is provided at 0% alcohol, 100% vaporization at a $R_c$ = 1 (naturally aspirated). This may be compared to an actual flow of 0.079 where 100% vaporization is realized and using 100% alcohol at a pressure ratio of 2.0. This represents an effective increase of actual flow through the engine of 2.82 times that of the naturally aspirated engine with only a doubling of intake manifold pressure.

Corrected flow, or the aerodynamic flow seen by the compressor, may be computed as follows:

$$W_{a-corrected} = \frac{W_a \sqrt{\theta}}{\delta}$$

But $\delta$ is the correction for deviation from 14.7 psi (standard day pressure) and is assumed constant herein ($\delta$ = 1.0); therefore for the purposes of the following calculations:

$$W_{a-corrected} = W_a \; x\sqrt{\theta}$$

The following chart indicates values for corrected compressor fuel-air mass flow assuming compressor efficiency of 70% and ambient temperature of 585° Rankin at the indicated percentages of vaporization of the mixture ahead of the compressor and at varying percent alcohol of the fuel at the indicated pressure ratios:

- 24 -

### CORRECTED FLOW (lb/sec)
#### PERCENT VAPORIZATION AHEAD OF COMPRESSOR = 25

| % Alcohol $R_c$ | 0 | 25 | 50 | 75 | 100 |
|---|---|---|---|---|---|
| 1.0 | 0.029 | 0.032 | 0.036 | 0.042 | 0.051 |
| 1.5 | 0.037 | 0.041 | 0.045 | 0.051 | 0.058 |
| 2.0 | 0.045 | 0.048 | 0.053 | 0.058 | 0.066 |
| 2.5 | 0.052 | 0.055 | 0.060 | 0.066 | 0.073 |
| 3.0 | 0.058 | 0.062 | 0.067 | 0.073 | 0.080 |
| 3.5 | 0.064 | 0.068 | 0.073 | 0.079 | 0.086 |

### CORRECTED FLOW (lb/sec)
#### PERCENT VAPORIZATION AHEAD OF COMPRESSOR = 50

| % Alcohol $R_c$ | 0 | 25 | 50 | 75 | 100 |
|---|---|---|---|---|---|
| 1.0 | 0.029 | 0.031 | 0.035 | 0.040 | 0.047 |
| 1.5 | 0.037 | 0.040 | 0.044 | 0.049 | 0.056 |
| 2.0 | 0.045 | 0.048 | 0.052 | 0.057 | 0.064 |
| 2.5 | 0.051 | 0.055 | 0.059 | 0.065 | 0.072 |
| 3.0 | 0.058 | 0.062 | 0.066 | 0.072 | 0.079 |
| 3.5 | 0.064 | 0.068 | 0.073 | 0.079 | 0.086 |

### CORRECTED FLOW (lb/sec)
#### PERCENT VAPORIZATION AHEAD OF COMPRESSOR = 75

| % Alcohol $R_c$ | 0 | 25 | 50 | 75 | 100 |
|---|---|---|---|---|---|
| 1.0 | 0.028 | 0.031 | 0.033 | 0.037 | 0.043 |
| 1.5 | 0.037 | 0.039 | 0.043 | 0.047 | 0.053 |
| 2.0 | 0.044 | 0.047 | 0.051 | 0.055 | 0.062 |
| 2.5 | 0.051 | 0.054 | 0.058 | 0.063 | 0.070 |
| 3.0 | 0.058 | 0.061 | 0.065 | 0.071 | 0.078 |
| 3.5 | 0.064 | 0.068 | 0.072 | 0.078 | 0.086 |

CORRECTED FLOW (lb/sec)

PERCENT VAPORIZATION AHEAD OF COMPRESSOR = 100

| % Alcohol $R_c$ | 0 | 25 | 50 | 75 | 100 |
|---|---|---|---|---|---|
| 1.0 | 0.028 | 0.030 | 0.032 | 0.034 | 0.038 |
| 1.5 | 0.037 | 0.039 | 0.041 | 0.044 | 0.049 |
| 2.0 | 0.044 | 0.046 | 0.049 | 0.053 | 0.058 |
| 2.5 | 0.051 | 0.054 | 0.057 | 0.061 | 0.067 |
| 3.0 | 0.058 | 0.061 | 0.064 | 0.069 | 0.076 |
| 3.5 | 0.064 | 0.067 | 0.071 | 0.076 | 0.083 |

As is illustrated by the above figures, corrected mass flow decreases slightly for a given compressor pressure ratio as the percent of vaporization increases.

Further, the work required to drive the compressor per pound of gas may be computed as:

$$\Delta h = C_{p\text{-ave}} \cdot \Delta T_{1-2} \; (BTU/lb.)$$

where:

$$C_{p\text{-ave}} = (1-A) \, C_{p\text{-gas}} + (A) \, C_{p\text{-alcohol}}$$

where:

$C_p$ = specific heat at constant pressure

$C_{p\text{-gas}} = .25$

$C_{p\text{-alcohol}} = .245$

and recalling that,

$$\Delta T_{1-2} = \frac{(T_1 \cdot R_c^{\,n} - T_1)}{\eta_c}$$

Using these equations, $\Delta h$, the compressor work required, can be computed as follows assuming a compressor efficiency of 70%, ambient temperature of 585° Rankin for various percentages of vaporization and varying percentages of alcohol of the fuel for the indicated pressure ratios.

COMPRESSOR Δh (BTU/lb.)

PERCENT VAPORIZATION AHEAD OF COMPRESSOR = 25

| % Alcohol | 0 | 25 | 50 | 75 | 100 |
|---|---|---|---|---|---|
| $R_C$ | | | | | |
| 1.0 | 0.0 | 0.0 | 0.0 | 0.0 | 0.0 |
| 1.5 | 22.8 | 22.4 | 22.0 | 21.5 | 21.1 |
| 2.0 | 40.4 | 39.8 | 39.1 | 38.3 | 37.5 |
| 2.5 | 55.1 | 54.2 | 53.3 | 52.3 | 51.2 |
| 3.0 | 67.7 | 66.6 | 65.5 | 64.3 | 63.1 |
| 3.5 | 78.8 | 77.6 | 76.3 | 75.0 | 73.5 |

COMPRESSOR Δh (BTU/lb.)

PERCENT VAPORIZATION AHEAD OF COMPRESSOR = 50

| % Alcohol | 0 | 25 | 50 | 75 | 100 |
|---|---|---|---|---|---|
| $R_C$ | | | | | |
| 1.0 | 0.0 | 0.0 | 0.0 | 0.0 | 0.0 |
| 1.5 | 22.4 | 21.3 | 20.2 | 19.1 | 18.0 |
| 2.0 | 39.7 | 37.9 | 36.0 | 34.0 | 32.0 |
| 2.5 | 54.1 | 51.6 | 49.1 | 46.4 | 43.7 |
| 3.0 | 66.5 | 63.5 | 60.4 | 57.1 | 53.8 |
| 3.5 | 77.4 | 74.0 | 70.3 | 66.6 | 62.7 |

COMPRESSOR Δh (BTU/lb.)

PERCENT VAPORIZATION AHEAD OF COMPRESSOR = 75

| % Alcohol | 0 | 25 | 50 | 75 | 100 |
|---|---|---|---|---|---|
| $R_C$ | | | | | |
| 1.0 | 0.0 | 0.0 | 0.0 | 0.0 | 0.0 |
| 1.5 | 22.0 | 20.3 | 18.5 | 16.7 | 14.9 |
| 2.0 | 39.0 | 36.0 | 32.9 | 29.8 | 26.5 |
| 2.5 | 53.2 | 49.1 | 44.9 | 40.6 | 36.2 |
| 3.0 | 65.3 | 60.4 | 55.2 | 50.0 | 44.5 |
| 3.5 | 76.1 | 70.3 | 64.4 | 58.2 | 51.9 |

COMPRESSOR $\Delta$h (BTU/lb.)

PERCENT VAPORIZATION AHEAD OF COMPRESSOR = 100

| % Alcohol | 0 | 25 | 50 | 75 | 100 |
|---|---|---|---|---|---|
| $R_c$ | | | | | |
| 1.0 | 0.0 | 0.0 | 0.0 | 0.0 | 0.0 |
| 1.5 | 21.6 | 19.2 | 16.8 | 14.3 | 11.8 |
| 2.0 | 38.3 | 34.2 | 29.9 | 25.5 | 21.0 |
| 2.5 | 52.2 | 46.6 | 40.7 | 34.8 | 28.6 |
| 3.0 | 64.1 | 57.2 | 50.1 | 42.8 | 35.2 |
| 3.5 | 74.7 | 66.7 | 58.4 | 49.9 | 41.1 |

Thus, for a constant pressure ratio, the work required by the compressor decreases substantially as the percentage of vaporization ahead of the compressor increases and as the percent alcohol of the total fuel increases. Where $\Delta$h is computed as 39.0 BTU/lb. at a pressure ratio of 2.0, 75% vaporization ahead of the compressor, 0% alcohol, $\Delta$h is computed as 21.0 BTU/lb. at a pressure ratio of 2.0, 100% vaporization ahead of the compressor and 100% alcohol as the fuel. Thus, the work required is almost reduced to 1/2.

In each of these examples, it has been demonstrated that at a given compressor pressure ratio, increasing the percent of vaporization ahead of the compressor results in a decrease in work required by the compressor and an increase in actual flow from the compressor without a significant change in corrected compressor flow. The present invention takes advantage of this result by applying a mesh screen ahead of the turbocharger compressor and immediately below carburetor 24 (FIGURE 2) to improve the percentage of vaporization ahead of the compressor. Of course, it will be understood that other means can be used to increase the percent of vaporization ahead of the compressor including vortex generators, as well as other well known devices. The present invention, therefore, it not limited to the use of the particular means described with respect to increasing vaporization ahead of the turbocharger compressor.

FIGURE 4 illustrates an alternative embodiment of the present invention wherein dual carburetors 250 and 252 are mounted to an intake manifold 254 for providing a stoichiometric mixture thereto. The carburetors are generally identical in design with the exception that carburetor 250 is designed to provide a stoichiometric mixture of gasoline while carburetor 252 is designed to provide a stoichiometric mixture of alcohol. Carburetor 250 includes a housing 260 having a fuel reservoir 262 communicating fuel to a discharge nozzle 264 by way of main well 266 and main jet 268. A throttle valve 270 is positioned in the carburetor discharge downstream of a venturi 272. A supply line 274 is connected to housing 260 by appropriate fitting 276 for delivering gasoline to fuel reservoir 262. While fuel reservoir 262 incorporates the standard float and needle arrangement for controlling the inlet of fuel into the reservoir, these elements are eliminated for purposes of clarity.

Carburetor 252 includes an outer housing 280 defining a fuel reservoir 282 communicating with a discharge nozzle 284 by way of main well 286 and main jet 288. A throttle plate 290 is mounted in the discharge of the carburetor immediately below a venturi 292. Alcohol is supplied to fuel reservoir 282 by line 294 coupled to housing 280 by appropriate fitting 296. Like carburetor 250, carburetor 252 is fitted with an appropriate fuel float and fuel inlet needle though not shown in FIGURE 4. An appropriate control linkage is fitted between carburetors 250 and 252 such that carburetor 250 is normally operated during the regular power cycle of the engine with carburetor 252 being operated when additional power is demanded from the engine. Thus, the arrangement illustrated in FIGURE 4 provides a system for normally supplying a stoichiometric mixture of gasoline to the engine and for supplementing such mixture with a stoichiometric mixture of alcohol in certain power-need situations.

The present invention envisions the addition of alcohol in a stoichiometric mixture rather than a mere addition of alcohol or a water/alcohol mixture with a stoichiometric mixture of another fuel. Further, the present invention is far superior to the use of merely a gasoline and alcohol mixture which is thereafter mixed with air to produce a stoichiometric mixture. The present invention permits the complete variation of the ratio of the alcohol mixture to the gasoline mixture. While in normal operating modes, substantially all of the fuel delivered by the present fuel system can be a gasoline mixture. As additional power is needed from the system, a stoichiometric mixture of alcohol is added in addition to the gasoline mixture. The ratio of the mixture may be controlled as desired, either by mechanical or electronic control of the fuel supply system to optimize performance and economy.

Application of the present invention also results in improved engine response upon acceleration. For example, the injection of an alcohol-air mixture into the turbocharger creates an almost instantaneous increase in corrected compressor speed. Upon acceleration, the turbocharger speed will not only experience the normal increase in speed resulting from an increase in engine speed, but will also experience the corrected speed effect resulting from the significant temperature drop occasioned by the injection of the alcohol-air mixture into the turbocharger. Thus, at idle, the turbocharger physical speed may be 15,000 rpm with the corrected speed increasing almost instantaneously to a corrected speed of 20,000 rpm upon injection of an alcohol-fuel mixture into the turbocharger. Further, because such an air-fuel charge is substantially cooler than a corresponding gasoline-air mixture, the charge is substantially more dense and provides more power to the engine. Correspondingly, the work required for compression is reduced and the temperature rise due to compression is lowered. Of course, the higher corrected speed maintains a higher pressure ratio as the compressor is driven by the turbocharger turbine or alternatively permits a specified pressure ratio to be achieved from a lower actual compressor speed.

It will also be understood that the present invention is also applicable where fuel injection is employed. In a fuel injection system, appropriate electronic control may be employed to add the appropriate amount of air and alcohol and gasoline such that a stoichiometric mixture of both fuels may be achieved prior to combustion. Of course, the quantity of alcohol and gasoline may be varied as the air may be varied to produce the power output desired. The primary embodiment of the present invention envisions the introduction of sufficient air to provide a stoichiometric mixture.

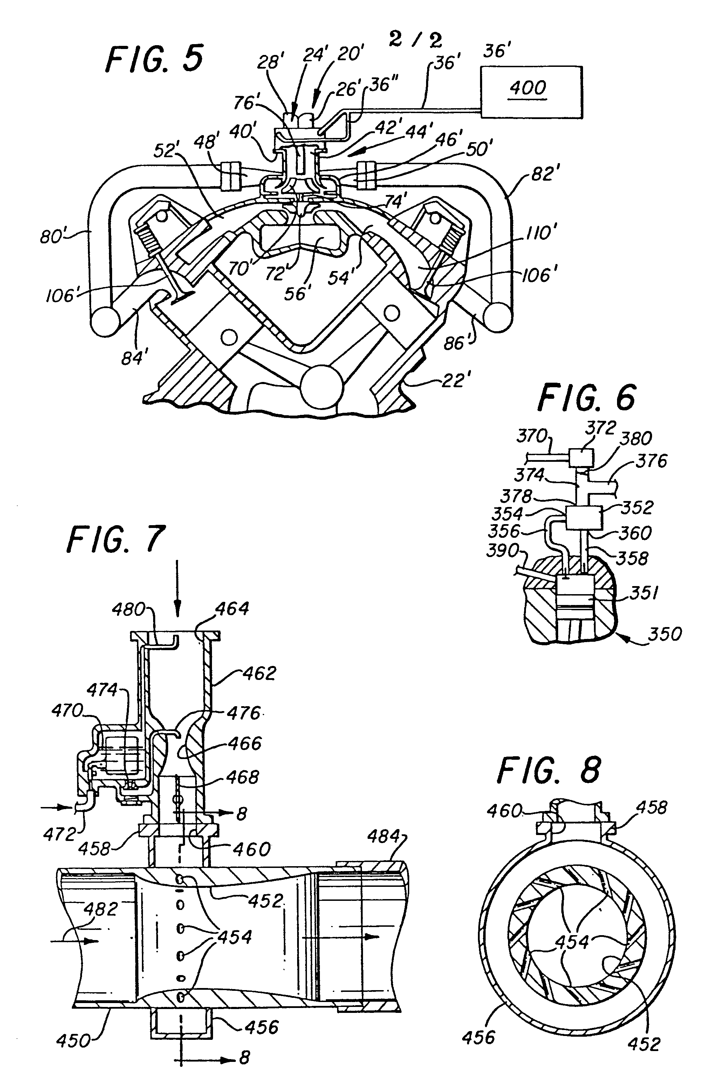

As has been indicated by the calculations presented above, the corrected or aerodynamic speed increases with an increase in the percent of alcohol of the total fuel supplied. Likewise, actual flow through the engine increases, corrected air flow is virtually unchanged, compressor work required decreases, compressor inlet temperature decreases and compressor discharge temperature decreases with an increase in percent of alcohol in the fuel. Thus, the present invention envisions the possibility of operating the engine solely with alcohol by merely closing down the supply of gasoline to carburetor 24. This arrangement is illustrated more specifically in FIGURE 5. Because the components in FIGURE 5 are substantially identical to those identified in FIGURE 1, corresponding elements between the FIGURES are identified by the same numeral with the addition of the designation prime (') added to the numeral in FIGURE 5.

The arrangement in FIGURE 5 is distinguished from that in FIGURE 1 only by the connection of the fuel supply 400 to carburetor 26' by supply lines 36' and 36''. Line 36'' is attached to carburetor 26'' to supply fuel to both the primary and secondary barrels of carburetor 26'. Because the operation of this system is identical to that discussed with respect to FIGURES 1-3, additional discussion with respect to the operation of the arrangement of FIGURE 6 is unnecessary here. However, reference is made to the detailed discussion presented hereinbefore with respect to the arrangement in FIGURES 1-3 to describe the operation of the system of FIGURE 6. Similarly, fuels other than alcohol may be used in the present system and the same advantages will be attained provided the fuel exhibits a higher temperature drop upon vaporization than fuels, such as gasoline, now used in internal combustion engines.

FIGURE 6 illustrates the present invention applied to a diesel engine 350. A single cylinder 351 of engine 350 is shown schematically in FIGURE 6. A turbocharger 352 includes a compressor outlet 354 communicating with the inlet valves of the engine by way of intake manifold 356. The exhaust valves communicate by way of exhaust manifold 358 with the turbine inlet 360 of turbocharger 352.

A supply line 370 supplies alcohol to a carburetor 372. Carburetor 372 communicates with an air intake manifold 374 which receives air at port 376 for supply to compressor inlet 378. A throttle control valve 380 is mounted between carburetor 372 and air intake manifold 374 to control the supply of alcohol and air mixture into turbocharger 352. Fuel injection unit 390 communicates diesel fuel in the normal fashion to the cylinder of engine 350.

In the operation of the system disclosed in FIGURE 5, air is supplied to the combustion chambers of the engine from turbocharger 352 through intake manifold 356. The operation of carburetor 372 to inject an air-alcohol mixture into the turbocharger 352 and from the turbocharger into the combustion chambers of engine 350 may be controlled either mechanically or electronically. This control may be operated as a function of the demand for power.

As can be appreciated from consideration of the embodiment illustrated in FIGURE 5, all those advantages noted above resulting from the decrease in compressor discharge temperatures resulting from the vaporization of alcohol prior to the turbocharger compressor, as well as the increase in flow rate of air through the turbocharger as a result of the use of alcohol, or any fuel having a substantial temperature drop due to vaporization, is reflected in this embodiment.

FIGURES 7 and 8 show an alternative arrangement of employing the present invention in a diesel engine. Referring to FIGURES 7 and 8, a system is provided for injecting a mixture of alcohol and air to a turbocharged engine and thereafter to the intake valves of a diesel engine. In this arrangement, an intake tube 450 includes a restricted throat or venturi area 452. As is shown in FIGURES 7 and 8, a plurality of apertures 454 are formed in the side wall of the throat area 452 and communicate between the interior of the intake tube and a circumferential chamber 456. These apertures are angularly positioned in the side wall of throat area 452 thereby directing fuel into the throat area in a spiral fashion. Chamber 456 has a flanged connector 458 defining an opening 460 therethrough.

A carburetor 462 is mounted to flange 458 such that an air fuel mixture is fed into circumferential chamber 456. Carburetor 462 is a standard single or double barrel carburetor having an air intake 464, a venturi area 466 and a throttle plate 468 below venturi area 466. Fuel is supplied to a fuel bowl 470 by way of fuel line 472. Fuel is metered through a jet 474 by way of conduit 476 to the venturi area 466. Atmospheric pressure is communicated through conduit 480 to fuel bowl 470.

As is indicated by arrow 482, air is drawn into and through the throat area 452 of manifold 450 to turbocharger 484 and thereafter to the inlet valves of a diesel engine. Because the engine is an unthrottled engine, as engine speed increases, air flow along the path indicated by arrow 482 increases proportionally. As the velocity of air moving through the throat area 452 increases, pressure reduces, as a result of the venturi effect caused by the restricted throat area, in proportion to the square of the velocity. With this drop in pressure, more fuel, in this case alcohol, is drawn from carburetor 462 into manifold 450 and to turbocharger 484 when throttle plate 468 is open. Because of the angular positioning of apertures 454 and spiral manner in which air-fuel is injected in intake tube 450, this mixture remains in the tube longer and is more completely vaporized upon entry into turbocharger 484.

The rate and amount of alcohol supplied into the air stream can likewise be controlled by the control of throttle plate 468. The positioning of throttle plate 468 may be controlled mechanically by conventional mechanical linkage. Alternatively, control can be in conjunction with diesel fuel being supplied to the engine or independent thereof. Further, control of throttle plate 468 may be performed electronically to optimize the quantity of alcohol fuel mixture supplied to manifold 450 and therefore to the engine. Thus, the arrangement illustrated in FIGURES 7 and 8 provides a simple and direct method for providing alcohol into the air stream provided through turbocharger 468 to the diesel engine.

Thus, the present invention may be directly applied to turbocharged diesel engines. Because of its high combustion temperatures, the diesel engine produces oxides of nitrogen, an undesirable byproduct of combustion. The application of the present invention, where an alcohol-air mixture is injected prior to the compressor, significantly reduces the production of oxides of nitrogen as a result of the decrease in engine inlet temperatures. Further, the addition of the alcohol-air mixture increases the mass flow rate through the engine as a result of the more dense mixture generated by the lower temperatures resulting from the decrease in temperature due to evaporization. The use of an alcohol-air mixture further increases the corrected compressor speed, permitting a reduction in mechanical speed while maintaining the same compressor pressure ratio. The addition of alcohol in the system reduces the work of the compressor and the substitution lessens the demand for petroleum based fuels as a result of the substitution of alcohol for the portion of diesel fuel it replaces.

Although preferred embodiments of the invention have been described in the foregoing detailed description and illustrated in the accompanying drawings, it will be understood that the invention is not limited to the embodiments disclosed, but is capable of numerous rearrangements, modifications and substitutions of parts and elements without departing from the spirit of the invention. The present invention is therefore intended to encompass such rearrangements, modifications and substitutions of parts and elements as fall within the scope of the appended claims.

CLAIMS:

1. A fuel supply system for supplying an air-fuel mixture to an engine comprising:

an air-fuel mixture system for generating a first and second mixture of fuel and air, said first mixture comprising a mixture of alcohol and said second mixture comprising a mixture of gasoline;

a first supply means for supplying alcohol to said air-fuel mixture system;

a second supply means for supplying gasoline to said air-fuel mixture system; and

a compressor means mounted between said air-fuel mixture system and the engine for compressing the air-fuel mixture delivered from the air-fuel mixture system to the engine.

2. The fuel supply system according to Claim 1 wherein said air-fuel mixture system comprises:

a carburetor means for receiving alcohol from said first supply means and generating a stoichiometric mixture of alcohol and for receiving gasoline from said second supply means and generating a stoichiometric mixture of gasoline.

3. The fuel supply system according to Claim 1 wherein said compressor means comprises a turbocharger mounted between said air-fuel mixture system and the engine and having a dynamic compressor wherein said first and second air-fuel mixtures from said air-fuel mixture system are compressed prior to being delivered to the engine.

4. The fuel supply system according to Claim 1 wherein said compressor means is a radial compressor mounted between said air-fuel mixture system and the engine for compressing the air-fuel mixture delivered from the air-fuel mixture system to the engine.

5.    The fuel supply system according to Claim 1 further comprising:

control means for varying the ratio of alcohol-air mixture to gasoline-air mixture.

6.    A fuel supply system comprising:

an air-fuel mixture system for generating a first and second mixture of fuel and air, said first mixture comprising a mixture of air with a first fuel having a relatively high temperature drop upon vaporization and said second mixture comprising a mixture of air with a second fuel; and

compressor means mounted between said air-fuel mixture system and the engine for compressing the air-fuel mixture delivered from the air-fuel mixture system to the engine.

7.    The fuel supply system according to Claim 6 further comprising:

means between said air-fuel mixture system and said compressor means for increasing the vaporization of the air-fuel mixture.

8.    The fuel supply system according to Claim 6 wherein said air-fuel mixture system comprises:

carburetor means for producing a mixture of the first fuel and air and for producing a mixture of the second fuel and air, said carburetor means including a carburetor having one primary venturi wherein the second fuel and air is mixed and a secondary venturi wherein the first fuel and air is mixed.

9.    The fuel supply system according to Claim 8 further comprising control structure for controlling the operation of the primary and secondary venturis of said carburetor such that the ratio of the second fuel and air mixture to the first fuel and air mixture may be varied.

10. The fuel supply system according to Claim 6 wherein said compressor means is a radial compressor mounted between the carburetor and the engine for compressing the air-fuel mixture delivered from the air-fuel mixture system to the engine.

11. The fuel supply system according to Claim 6 further comprising:

control means for varying the ratio of the first fuel and air mixture to the second fuel and air mixture in response to increased power needs from the engine.

12. The fuel supply system according to Claim 6 wherein said air-fuel mixture system comprises:

a first carburetor supplied by said first supply means and for providing a first fuel and air mixture, and a second carburetor supplied by said second supply means for providing a second fuel and air mixture, and further including control means for controlling the operation of said carburetors to vary the ratio of the second fuel and air mixture to the first fuel and air mixture.

13. In an engine fuel supply system including means for combining a fuel with air and for compressing the air-fuel mixture prior to delivery to and combustion of the air-fuel mixture in the engine, the improvement comprising:

means for adding a second fuel to the air-fuel mixture prior to compressing the air-fuel mixture, said second fuel being one of a group producing a temperature drop upon evaporization substantially greater than that of the first fuel, thereby producing a greater corrected compressor speed and a greater density after compression.

14. In an engine fuel supply system including means for combining a first fuel with air for combustion in an engine, the improvement comprising:

means for mixing a second fuel and air, said second air-fuel mixture having a relatively high temperature drop upon evaporization when compared to that of the first air-fuel mixture; and

means for directing said second air-fuel mixture to a dynamic compressor for compressing said fuel mixture prior to introduction of the mixture to the engine.

15. The fuel supply system according to Claim 14 further comprising:

means within said directing means for increasing the vaporization of the air-fuel mixture.

16. The fuel supply system according to Claim 14 wherein said engine is a compression ignition engine, said first fuel is diesel fuel and said second fuel is alcohol.

17. The fuel supply system according to Claim 16 further comprising:

a tube communicating air flow to the dynamic compressor for supply to the engine, said tube having a restricted area therein to form a venturi; and

means for communicating said second fuel to said manifold at the restricted area of said manifold.

18. The fuel supply system according to Claim 14 wherein said second fuel is alcohol.

19. The fuel supply system according to Claim 14 further comprising:
control means for varying the ratio of the first air-fuel mixture to the second air-fuel mixture.

20. The fuel supply system according to Claim 14 wherein said dynamic compressor comprises a turbocharger mounted between said means for mixing the second fuel and air mixture and the engine.

21. A method for supplying fuel to an engine comprising:
combining a first fuel with air to form a first air-fuel mixture;
combining a second fuel with air to form a second air-fuel mixture, the second fuel producing a temperature drop upon evaporization substantially greater than that of the first fuel;
moving the second mixture through a dynamic compressor wherein the mixture is evaporated and compressed; and
igniting the first and second air-fuel mixtures in the engine.

22. The method according to Claim 21 further comprising:
completely vaporizing the second mixture prior to moving the mixture through the dynamic compressor.

23. The method according to Claim 21 wherein combining the second fuel with air includes combining alcohol with air and wherein combining the first fuel with air includes combining gasoline with air.

24. The method according to Claim 23 wherein the step of combining alcohol and air includes introducing alcohol into a carburetor wherein the alcohol is mixed with an appropriate quantity of air to facilitate combustion of substantially all of the alcohol; and

wherein the step of combining gasoline with air includes introducing gasoline into a carburetor wherein the gasoline is mixed with air to form a mixture of an appropriate ratio to facilitate combustion of substantially all of the gasoline in the mixture.

25. The method according to Claim 21 further comprising:

controlling the ratio of the first mixture with respect to the second mixture.

26. A method for supplying a fuel mixture to a compression ignition engine, comprising:

introducing alcohol ahead of the compressor stage of a turbocharger whereby the evaporization of the alcohol substantially lowers the inlet temperature to the compressor causing a subsequent increase in density of the gas leaving the compressor; and

directing the compressed alcohol and air mixture to the combustion chamber whereby the alcohol-air mixture is ignited subsequent to the normal combustion of the compression ignited fuel in the engine.

27. A fuel supply system comprising:

an air-fuel mixture system for generating a mixture of fuel and air, said mixture comprising a mixture of air with a first fuel having a temperature drop upon vaporization greater than that of a mixture of gasoline and air; and

compressor means mounted between said air-fuel mixture system and the engine for compressing the air-fuel mixture delivered from the air-fuel mixture system to the engine.

0027689

1 / 2

GASOLINE  30  
32  
28 24 20  
76  26  
42  
48 40  44 46  
80  5074  82  
109  
106  109  106  
52 54  
70 72 56 110  
84  86  
22

FIG. 1

ALCOHOL  34  
36

154 158  
152  
176  200  
32  24  
188  216  
178  206  
182  210  
174  202  
180  208  
170  186  
184  218  172  
219

FIG. 2

220  
230 234  
176  236  
238  
224  
222  232  
218  226  228

FIG. 3

250  252  
266  260 274  286  280  
264  284  296  
262  276  282  294  
268  272  288  292  
270  290  
254

FIG. 4

FIG. 5

28' 24' 20'
76' 26' 36"
40' 36' 36'
52' 48'
80'
42' 44' 46' 50'
82'
74'
110' 106'
70' 72' 54'
56'
106'
84' 86'
22'

400

FIG. 6

370 372 380
374 376
378
354 352
356 360
390 358
351
350

FIG. 7

480 464
462
474
470 476
466
468
472 8
458 460
484
482 452
454
450 456
8

FIG. 8

460 458
454
456 452

0027689

**European Patent Office**

**EUROPEAN SEARCH REPORT**

Application number

EP 80 30 3326

| | DOCUMENTS CONSIDERED TO BE RELEVANT | | CLASSIFICATION OF THE APPLICATION (Int. Cl.³) |
|---|---|---|---|
| Category | Citation of document with indication, where appropriate, of relevant passages | Relevant to claim | |
| | <u>FR - E - 59 569</u> (SERRUYS)<br>　* Page 1, left-hand column, last<br>　　paragraph; right-hand column,<br>　　paragraph 1; page 2, right-<br>　　hand column, paragraphs 3,4<br>　　and last paragraph; page 3,<br>　　left-hand column, paragraph 1;<br>　　figures 1,2 *<br><br>　　　　　--<br><br><u>DE - A - 2 749 806</u> (P & O ENERGY)<br>　* Page 6, last paragraph; page<br>　　7, paragraph 1; page 7, para-<br>　　graphs 3,5; page 9, paragraph<br>　　1; page 11, paragraph 2; page<br>　　15, paragraphs 1,3; page 16,<br>　　paragraph 1; page 25, para-<br>　　graph 2 *<br><br>& CA - A - 1 081 564<br><br>　　　　　--<br><br><u>FR - A - 1 010 151</u> (PRADIER)<br>　* Page 1, left-hand column, para-<br>　　graphs 1,4; page 2, left-hand<br>　　column, lines 29-36; 45-53;<br>　　right-hand column, last para-<br>　　graph; page 3, left-hand co-<br>　　lumn, lines 1-18; figure 3 *<br><br>　　　　　-- | 1,3,6,<br>13,14,<br>21,23<br><br><br><br><br><br>1,4,<br>16,18,<br>19,26,<br>27<br><br><br><br><br><br><br><br>1 | F 02 M 13/06<br>F 02 D 19/08<br>F 02 B 37/00<br><br><br><br><br><br><br>TECHNICAL FIELDS SEARCHED (Int. Cl.³)<br><br>F 02 B<br>F 02 M<br>F 02 D |
| A | <u>GB - A - 492 857</u> (DAIMLER-BENZ)<br>　* Page 1, lines 9-25; 48-64;<br>　　105-106; page 2, lines 1-20;<br>　　43-47 *<br><br>　　　　　-- | 1 | CATEGORY OF CITED DOCUMENTS<br><br>X: particularly relevant<br>A: technological background<br>O: non-written disclosure<br>P: intermediate document<br>T: theory or principle underlying<br>　　the invention<br>E: conflicting application<br>D: document cited in the<br>　　application<br>L: citation for other reasons |
| A | <u>DE - C - 897 631</u> (DAIMLER-BENZ)<br>　* Page 1, lines 1-4; 25-30; page<br>　　2, lines 1-6 *<br>　　　　　--　　　　　./. | 14,16 | |

| | &: member of the same patent family, corresponding document |
|---|---|

The present search report has been drawn up for all claims

| Place of search | Date of completion of the search | Examiner |
|---|---|---|
| The Hague | 07-01-1981 | JORIS |

EPO Form 1503.1　06.78

# EUROPEAN SEARCH REPORT

**European Patent Office**

| | DOCUMENTS CONSIDERED TO BE RELEVANT | | CLASSIFICATION OF THE APPLICATION (Int. Cl. 3) |
|---|---|---|---|
| Category | Citation of document with indication, where appropriate, of relevant passages | Relevant to claim | |
| A | GB - A - 611 909 (BENDIX) <br> * Page 1, lines 69-82; page 2, lines 17-30 * <br> -- | 1 | |
| A | MACHINE DESIGN, vol. 43, no. 17, 8th July 1971, pages 20-23 Cleveland, U.S.A. "Turbochargers may clean" <br> * Page 22, last paragraph; page 23, paragraph 1 * <br> -- | 1 | |
| D,A | US - A - 2 098 178 (CORSE) <br> * Page 1, left-hand column, lines 1-45 * <br> -- | 1 | **TECHNICAL FIELDS SEARCHED (Int. Cl. 3)** |
| D,A | US - A - 1 552 995 (McKENZIE-MAR-TYN) <br> * Page 1, lines 23-46 * <br> -- | 1 | |
| D,A | US - A - 1 676 827 (HOWARD) <br> * Page 1, lines 9-25 * <br> -- | 1 | |
| D,A | FR - A - 2 318 317 (OVERTON) <br> * Page 1, lines 1-6; 31-39* | 1 | |
| D,A | US - A - 4 019 477 (OVERTON) <br> -- | | |
| A | DE - A - 2 737 849 (VW) <br> * Page 4, lines 6-35; page 5, lines 1-14 * <br> & US - A - 4 182 294 (VW) | 1 | |